# EUROPEAN PATENT SPECIFICATION

(11) **EP 2 127 526 B1**
(45) Date of publication and mention of the grant of the patent: **29.04.2015**
(21) Application number: 09007592.0
(22) Date of filing: 24.09.2003
(51) Int. Cl.: A21D 8/04, A23L 1/10, A23L 1/105, A23L 1/164, A23L 1/212, A23L 1/217

(54) **Reduction of acrylamide formation**
Reduktion der Acrylamidbildung
Réduction de formation d'acrylamide

(30) Priority: 24.09.2002 GB 0222185
(43) Date of publication of application: 02.12.2009
(62) Divisional of application: 03750945.2
(73) Proprietor: Zeracryl AS, 1432 Aas (NO)
(72) Inventor: Baardseth, Pernille, N-1432 Ås (NO); Blom, Hans, N-1432 Ås (NO); Enersen, Grethe, N-1432 Ås (NO); Skrede, Grete, N-1432 Ås (NO); Slinde, Erik, N-1432 Ås (NO); Sundt, Thea, N-1432 Ås (NO); Thomassen, Trond, N-1432 Ås (NO)
(74) Representative: Golding, Louise Ann

(56) References cited:
- WO-A-01/78524
- WO-A-03/026443
- WO-A-2004/004484
- "Bread for heating by microwave oven - obtained by fermenting dough containing 1 or 2 of peroxidase, glucose oxidase, polyphenol oxidase trans-glutaminase and lipoxygenase and baking" DERWENT HOST- DERWENT, 3 February 1998 (1998-02-03), XP002268083
- "Inhibiting Maylard's reaction of protein in processed beverages and food contg. milk - by treating food with trans-glutaminase preventin browning of protein" DERWENT HOST- DERWENT, 14 January 1997 (1997-01-14), XP002268084

## Description

The present invention relates to improvements in and relating to French fries.

In a publication by the Swedish National Food Administration (see www.slv.se/engdefault.asp) it was reported that many cooked foods, in particular fried, grilled or baked foods, had surprisingly been found to contain high levels of the toxic contaminant acrylamide. No suggestion was made as to how the acrylamide content of such foods could be reduced.

A further report of acrylamide production in food cooking occurred in Tareke et al., J. Agric. Food Chem 50: 4998-5006 (2002).

We have now surprisingly found that the acrylamide content of French fries can be reduced by treatment of the French fries prior to cooking with acid.

The use of food grade acids to treat potato products is disclosed in WO 03/026443 and in WO 01/78524, but in neither of these documents is it proposed that the acid may be used to treat uncooked potato to reduce the production of acrylamide in subsequesnt cooking. Other methods for the treatment of food products are described in JP-A-10028516 and JP-A-09009862, but these documents do not mention treatment with any acid or the formation of acrylamide in cooking of a potato product.

Viewed from one aspect the invention provides the use of a physiologically acceptable acid for the treatment of uncooked French fries or flour for use in the preparation of uncooked French fries to reduce acrylamide production in subsequent cooking thereof.

The physiologically tolerable acid used according to the invention may be any acid acceptable for use in foodstuffs, e.g. organic acids, such as citric, malic, acetic, maleic, tartaric, succinic and lactic acids or inorganic acids such as hydrochloric, sulphuric and phosphoric acids and sulphur dioxide. The use of citric and hydrochloric acids is especially preferred, as is the use of lactic acid and/or of phosphoric acid. The use of hydrochloric acid is especially preferred. The acid is preferably used in a quantity and strength sufficient to reduce the surface pH of the uncooked French fries treated to 1 to 5.5, preferably 3 to 5, especially about 4. Following acid treatment, the uncooked French fries are preferably stored for up to 7 days (e.g. 30 minutes to 24 hours, especially 1 to 6 hours before cooking or freezing).

In this process, the acid is preferably used in the form of a buffer solution.

Following treatment with the acid, the uncoooked French fries may be cooked using cooking techniques that expose the product to temperatures above 150°C, e.g. by baking, grilling, roasting or frying.

Before such high temperature cooking, it is desirable to rinse the treated uncooked product with water.

The cooking may be a single stage operation. However it may instead be one stage of a multi stage (e.g. two stage) cooking procedure. Thus the technique of the invention is especially applicable to French fries which are treated according to the invention, partially cooked, transported and/or stored, then cooked again.

Where appropriate, the products produced according to the invention may be further processed, e.g. by drying, freezing, sealing into moisture proof containers etc. Such processing steps, which are often conventional for French fries, form further optional steps in the processes of the invention.

The invention is especially applicable for the production of so-called oven-ready french-fried potatoes which are provided to the consumer in part-cooked form for baking prior to serving, as well as to the production of chopped ready-to-fry potatoes (e.g. of the type produced for deep frying in restaurants).

Viewed from a further aspect the invention provides a process for the preparation of ready to cook (e.g. oven-ready or ready to fry) french fried potatoes which process comprises chopping potatoes, treating the chopped potatoes with a physiologically acceptable acid, frying the acid treated potatoes, and optionally loading the fried potatoes into a container, and optionally sealing the container.

The chopping stage in this process is preferably such as to produce batons having a cross-sectional area of 10 to 100mm², especially preferably 25 to 80mm².

The container used in this process will typically be a plastic bag, paper carton or bag or other container conventionally used for storage and transport of ready to cook french fries.

French-fries are preferably made from sliced potato; however they may also be made from extruded or moulded carbohydrate-containing pastes produced using powdered or granulated potato and/or cereal (e.g. rice).

Thus in alternative aspects of the invention the uncooked French fries may be produced from potato and/or cereal flour treated with an acid as described herein before being moulded or extruded in paste form into French-fry shapes and then cooked. If desired, the acid treatment may be effected on French fry shapes moulded or extruded using a potato and/or cereal flour based paste.

The potatoes treated according to the invention are preferably of a variety selected from Maris Piper, Beate or Russet, especially Maris Piper. Saturna, King Edward, Russet Burbank, Bintje, Shepady and Shasta may also be used. Especially preferably the potatoes are selected from varieties having a reducing sugar content of less than 1.5% wt, particularly less than 1.0% wt.

Besides the acid treatment according to the invention, the French fries of the invention may be prepared by conventional methods, optionally involving rinsing and/or drying after the treatment. Thus such French fries may optionally contain further components, such as conventional foodstuff components or additives, e.g. salt, sugars, flavours, stabilizers, and buffers.

The invention will now be illustrated further with reference to the following Example.

### Example 1

### French fries

### Ingredients

Potatoes of the variety Beate were obtained from Department of Horticulture and Crop Sciences, Agricultural University of Norway, Ås. The potatoes were stored at 8°C from harvest until three weeks prior to processing when storage temperature was reduced to 4°C.

Palm oil was obtained from Denofa AS, Frederikstad, Norway. The oil had maximum 0.05% free fatty acids, an iodine number of 60, a peroxide value of 0.5 mekv/kg and an anisidin number of 5.0. Fatty acid composition was: 12% linoleic acid, 42% oleic acid and 45% saturated fatty acids.

The *Lactobacillus* strain NCIMB 40450 was used. Bacteria cells were grown and harvested in the logarithmic growth phase by centrifugation and resuspended in 1% salt brine.

The soaking solution used was:
Brine for fermentation: 1% NaCl with the addition of bacteria until 1x 10⁶ cells/ml

### Pre-treatment of potatoes

Potatoes (var. Beate) were peeled and cut with a knife into 6 x 6-mm sticks. The sticks (200g) were immediately added to 400 mL of brine. Fermentation was allowed to proceed in an incubator at 30°C for 5 hrs. Control samples were rinsed in water and deep-fried without delay.

### Deep frying

The potatoes were dried with paper towels and deep-fried as 150-g portions in palm oil at 170°C in a Nuovo Elframo, Model EB (Bergamo, Italy) fryer for 8 min.

### Analyses

Dry matter was determined in a vacuum oven at 70°C overnight. pH of brines was determined using a pH-meter. Soluble solids of potatoes were determined as °Brix using a Metler Toledo RE40 refractometer. Samples were homogenised and a few drops of the homogenates were applied on the refractometer. °Brix is given as g sucrose/100g sample.

Accredited analyses of acrylamide were carried out at Steins Laboratorium, Denmark.

### Results

The °Brix-value of the potatoes (var. Beate) was 6.8.

Results from the analyses of deep-fried products are shown in Table 1 below.

**Table 1**

| | | Dry matter | | Acrylamide | |
|---|---|---|---|---|---|
| Pre-treatment | pH in brine after pre-treatment | g/100g fried product | µg/kg dry matter | µg/kg product | % reduction (product) |
| | | | | | |
| -control | 6.7* | 86.0 | 744 | 640 | 0 |
| -fermented | 4.3 | 85.3 | 469 | 400 | 38 |

| | | | | | |
|---|---|---|---|---|---|
| * tap water | | | | | |

The samples within each of the product groups were deep-fried for the same period of time, rather than being deep-fried until a certain product colour. Any difference in acrylamide levels thus reflects the ability of the treatment to prevent the formation of acrylamide, regardless of the colour that might be formed during deepfat-frying.

## Claims

1. The use of a physiologically acceptable acid for the treatment of uncooked French fries or flour for use in the preparation of uncooked French fries to reduce acrylamide production in subsequent cooking thereof.

2. Use as claimed in claim 1 of an acid selected from lactic, citric, phosphoric and hydrochloric acids.

3. Use as claimed in claim 1 wherein said acid is lactic acid.

4. A process for reducing acrylamide production in subsequent cooking of part-cooked french fried potatoes which process comprises chopping potatoes, treating the chopped potatoes with a physiologically acceptable acid, frying the acid treated potatoes whereby to produce part-cooked French fried potatoes, and optionally loading the fried potatoes into a container.

5. A process as claimed in claim 4, further comprising the step of cooking the part-cooked French fried potatoes whereby to produce French fries having a reduced acrylamide content.

6. A process as claimed in claim 4 or claim 5 wherein said acid is selected from lactic, citric, phosphoric and hydrochloric acids.

7. A process as claimed in claim 4 or claim 5 wherein said acid is lactic acid.

8. French fries obtainable by a process as claimed in any one of claims 4 to 7.

## Patentansprüche

1. Verwendung einer physiologisch verträglichen Säure zur Behandlung ungegarter bzw. -frittierter Pommes frites oder von Mehl zur Verwendung bei der Herstellung ungegarter Pommes frites zur Reduktion einer Acrylamidbildung bei dem nachfolgenden Garen derselben.

2. Verwendung nach Anspruch 1 einer Säure ausgewählt aus Milch-, Zitronen-, Phosphor- und Salzsäuren.

3. Verwendung nach Anspruch 1, wobei die besagte Säure Milchsäure ist.

4. Verfahren zur Reduktion einer Acrylamidbildung bei dem nachfolgenden Garen von teilgegarten bzw. -frittierten Pommesfrites-Kartoffeln, das das Kleinschneiden von Kartoffeln, das Behandeln der klein geschnittenen Kartoffeln mit einer physiologisch verträglichen Säure, das Frittieren der säurebehandelten Kartoffeln, wodurch teilgegarte Pommesfrites-Kartoffeln hergestellt werden, und optional das Laden bzw. Füllen der frittierten Kartoffeln in einen Behälter beinhaltet.

5. Verfahren nach Anspruch 4, weiter aufweisend den Schritt von Garen der teilgegarten Pommesfrites-Kartoffeln, wodurch Pommes frites mit einem reduzierten Acrylamidgehalt hergestellt werden.

6. Verfahren nach Anspruch 4 oder Anspruch 5, wobei die besagte Säure ausgewählt wird aus Milch-, Zitronen-, Phosphor- und Salzsäuren.

7. Verfahren nach Anspruch 4 oder Anspruch 5, wobei die besagte Säure Milchsäure ist.

8. Pommes frites, die durch ein Verfahren nach irgendeinem der Ansprüche 4 bis 7 erhalten werden können.

## Revendications

1. Utilisation d'un acide physiologiquement acceptable pour le traitement de frites non cuites ou de farine pour utilisation dans la préparation de frites non cuites afin de réduire la production d'acrylamide au cours de leur cuisson ultérieure.

2. Utilisation selon la revendication 1 d'un acide choisi entre les acides lactique, citrique, phosphorique et chlorhydrique.

3. Utilisation selon la revendication 1, dans laquelle ledit acide est l'acide lactique.

4. Procédé de réduction de la production d'acrylamide lors de la cuisson ultérieure de pommes de terre frites en partie cuites, lequel procédé comprend les étapes consistant à tronçonner les pommes de terre, traiter les pommes de terre tronçonnées avec un acide physiologiquement acceptable, frire les pommes de terre traitées à l'acide de manière à produire des pommes de terre frites en partie cuites et éventuellement charger les pommes de terre frites dans un récipient.

5. Procédé selon la revendication 4, comprenant en outre l'étape de cuisson des pommes de terre frites en partie cuites de manière à produire des frites ayant une teneur en acrylamide réduite.

6. Procédé selon la revendication 4 ou la revendication 5, dans lequel ledit acide est choisi entre les acides lactique, citrique, phosphorique et chlorhydrique.

7. Procédé selon la revendication 4 ou la revendication 5, dans lequel ledit acide est l'acide lactique.

8. Frites susceptibles d'être obtenues par un procédé selon l'une quelconque des revendications 4 à 7.
